# EUROPEAN PATENT SPECIFICATION

(11) **EP 3 951 237 B1**
(45) Date of publication and mention of the grant of the patent: **28.02.2024**
(21) Application number: 20783900.2
(22) Date of filing: 27.03.2020
(51) Int. Cl.: F16M 13/02, F16M 11/04, A47F 3/06, A47F 7/00

(54) **DEVICE FOR SUSPENDING PARTS**
VORRICHTUNG ZUM AUFHÄNGEN VON TEILEN
DISPOSITIF POUR SUSPENDRE DES PIÈCES

(30) Priority: 29.03.2019 ES 201930291
(43) Date of publication of application: 09.02.2022
(73) Proprietor: Galiana Galvañ, Demetrio, 03660 Novelda Alicante (ES); Diez Canto, Leopoldo, 03660 Novelda Alicante (ES)
(72) Inventor: Galiana Galvañ, Demetrio, 03660 Novelda Alicante (ES); Diez Canto, Leopoldo, 03660 Novelda Alicante (ES)
(74) Representative: Ibarra Garcia, Isabel
(86) International application number: PCT/ES2020/070210
(87) International publication number: WO 2020/201599

(56) References cited:
- EP-A1- 1 034 727
- CN-U- 204 813 032
- DE-U1- 9 302 612
- DE-U1-202004 007 753
- ES-A1- 2 214 133
- GB-A- 2 443 267
- US-A- 4 565 290
- US-A1- 2002 088 917
- US-B1- 7 316 379

## Description

### OBJECT OF THE INVENTION

The present invention relates to a device for suspending parts, which incorporates a U-shaped part with suspension elements which will be joined to the part to be suspended, with this U-shaped part being connected to a sleeve that slides on a shaft, this sleeve-shaft assembly being fixed on a wall or ceiling by supporting means.

The object of the invention is to enable parts to be suspended by means of a device capable of allowing and blocking the manipulation of the part easily by the user, with the device of the invention being concealed behind the suspended plate itself.

Advantageously, the present invention allows parts such as slabs of decorative natural stone and prefabricated siliceous rock or ceramics to be suspended, providing a very secure device that prevents the inappropriate manipulation by third parties as a result of the locking components it includes.

### BACKGROUND OF THE INVENTION

Currently, when a user sets out to suspend a part with little thickness, regardless of its shape and dimension (square, rectangular or puzzle piece-like) to be exhibited as an ornamental piece, highly complex means are required to assure that the part is suspended as securely as possible. An example of a device for suspending parts is for example shown in GB2443267A.

These everyday applications present a series of drawbacks in situations in which the means used for supporting parts require visible portions that are anti-aesthetic and not at all advisable when the part to be suspended is relevant on a decorative level, being part of a design that can only be placed frontally, inserted between the parts surrounding it.

### DESCRIPTION OF THE INVENTION

The problems set forth are entirely solved by means of the device of the invention, such that a user may suspend parts by means of the object of the present invention with guaranteed security and enabling the means used to be concealed, which is extremely relevant when the parts to be suspended are decorative parts fixed frontally, i.e., perpendicular to the surface on which the part is fixed.

The device has the following components:
- a U-shaped part with perforations connected to suspension elements, in the form of steel cables or bars or nylon threads and a front hanging body joined to the U-shaped element by means of a firm weld;
- a shaft having a circumferential flange as a stop and anti-rotation means;
- a sleeve that moves on the shaft and which has free passages for receiving the suspension elements and a hollow recess for coupling the central hanging body;
- supporting means;
- a locking component; and
- a magnetizing part connected to the sleeve.

Advantageously, the configuration of the elements forming the device of the invention enables the suspension means to be received and locked on the sleeve of the shaft. Therefore, once que the suspension elements have been inserted in the free passages of the sleeve and the front hanging body has been coupled on the hollow recess of the sleeve, it is possible to move the sleeve on the shaft, providing the locking required to prevent third parties from manipulating the inappropriate coming out of the suspension elements.

Advantageously, the fact that the device incorporates locking elements for preventing the movement of the sleeve will contribute to preventing the suspension elements from coming out of the free passages once said elements have been inserted in these passages.

In summary, the device is one that allows parts of any shape and design or decorative plates to be suspended, providing a secure form of suspension which is not visible once it has been assembled and easily manipulated from the outside so as to enable the part to be manipulated. Given that the parts to be suspended are fixed frontally, they can be placed and removed effortlessly, i.e., without disturbing or colliding with the side parts surrounding it.

### DESCRIPTION OF THE DRAWINGS

To complement the description provided below and for the purpose of helping to better understand the features of the invention according to a preferred practical embodiment thereof, a set of drawings is attached as an integral part of said description, in which the following is depicted in an illustrative and non-limiting manner:
Figure 1 shows a depiction corresponding to a perspective view of a device for suspending parts of any dimension and shape made according to the object of the present invention in which the locking component is in the locked position.
Figure 2 shows a depiction of a perspective view of the device of the invention according to Figure 1 in which the locking component is unlocked.
Figure 3 shows a detailed depiction of the partial view of the sleeve forming the device of the invention.
Figure 4 shows a detailed depiction of the U-shaped part with perforations, the suspension elements and the front hanging body forming the device of the invention.

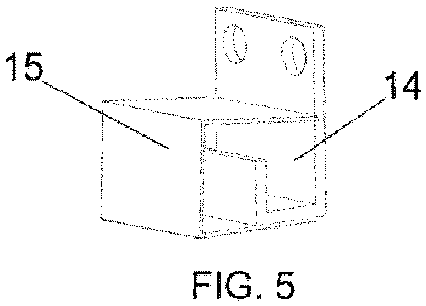

Figure 5 shows a detailed depiction of one of the supporting means forming the device of the invention, formed by a channeled element and a complementary part.
Figure 6 shows a second embodiment in which the depiction corresponds to the device of the invention, including two electromechanical elements.

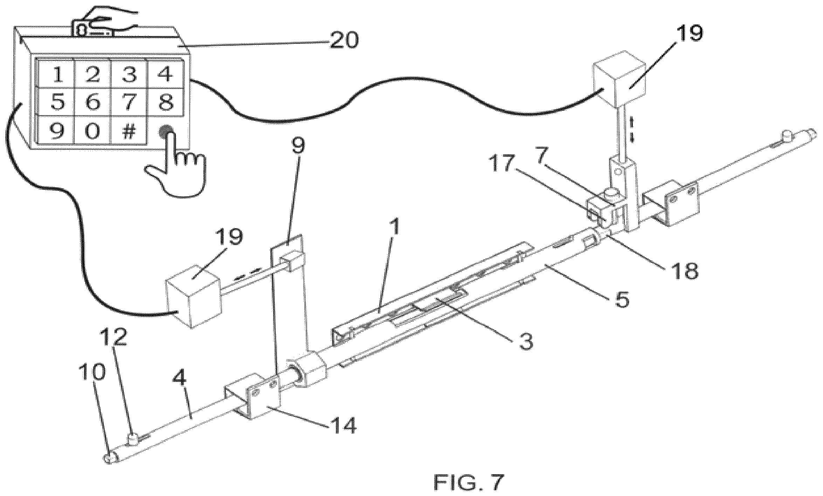

Figure 7 shows a depiction of the device of Figure 6 in which an electric control panel actuated by means of a security code is included.

### PREFERRED EMBODIMENT OF THE INVENTION

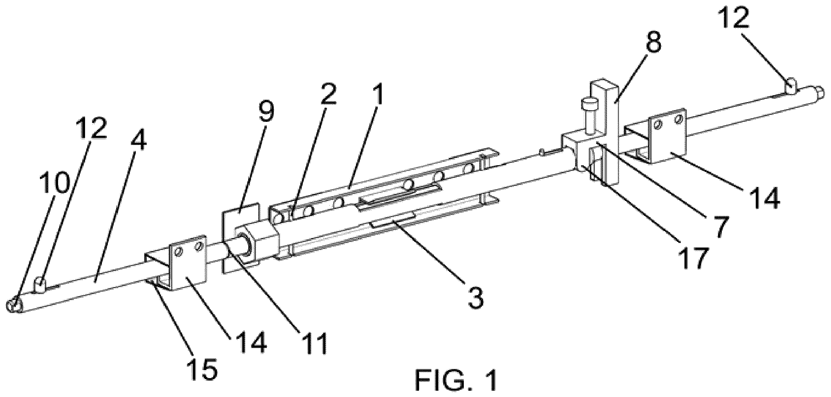

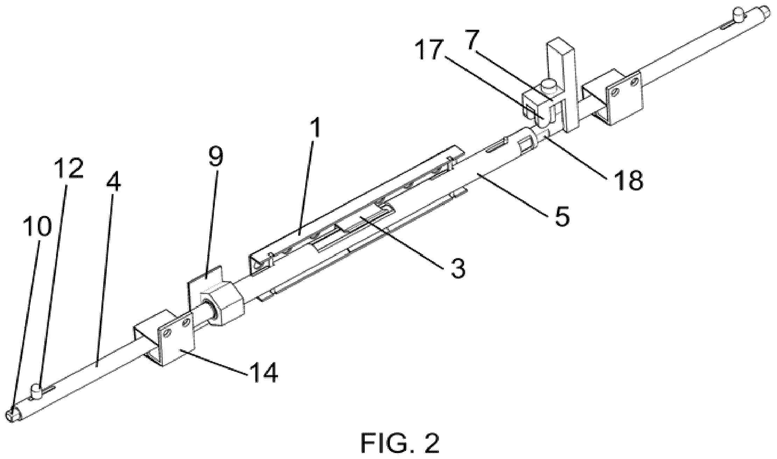

As can be seen in Figures 1 and 2, the device of the invention is formed from a U-shaped part (1) having suspension elements (2) and a front hanging body (3). The part to be suspended will be joined to this U-shaped part (1).

The device of the invention includes a preferably solid shaft (4) and a sleeve (5) which is assembled on the shaft (4) and allows the sleeve to move on the shaft.

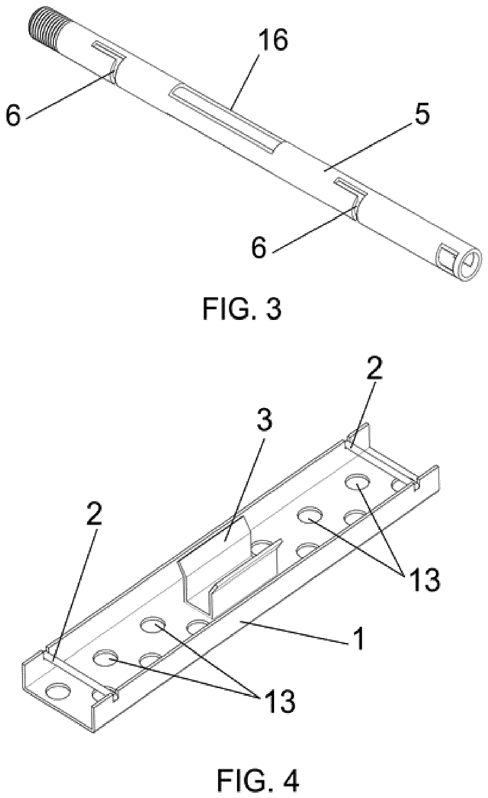

As can be observed in the partial view of the sleeve depicted in Figure 3, the inside of the sleeve (5) is hollow and has free passages (6) for receiving the suspension elements (2) of the U-shaped part (1). Advantageously, the preferably L-shaped configuration of the free passages enables, once the suspension means (2) have been inserted in the free passages (6) and the sleeve (5) has been moved suitably on the shaft (4), the free passages (6) to be locked and rendering it impossible for the suspension elements (2) to come out freely.

Optionally, the suspension elements (2) are formed by steel cables, nylon threads or steel bars.

Figures 1 and 2 depict the device of the invention, where Figure 1 allows the locking component (7) to be observed in the locked position, i.e., not allowing the suspension elements (2) to come out of the free passages (6). Meanwhile, Figure 2 depicts the locking component (7) in an unlocked position, i.e., not resting on the shaft (4), such that the sleeve (5) can be moved to the position in which the free passages (6) of the sleeve (5) allow the suspension means (2) to come out.

It can be observed in the mentioned figures that the front hanging body (3) of the U-shaped part (1) is coupled to the shaft (4), since the sleeve (5) has a hollow recess (16) which allows the front hanging element to rest without any difficulty on the shaft.

The free movement of the sleeve (5) on the shaft (4) when the front hanging body (3) is coupled on the sleeve-shaft assembly is thereby provided since it does not rest on the sleeve at any point. Likewise, the shaft (4) has a circumferential flange (11) as a stop which prevents the sleeve (5) from moving past the area demarcated by the circumferential flange (11).

The shaft (4) also has anti-rotation means (12) for preventing the shaft from rotating around.

Figure 4 depicts in detail the U-shaped part (1), which has a plurality of perforations (13) such that in order to join the U-shaped part (1) with the part to be suspended, a resin is applied on both the inner face of the part to be suspended and on the outer face of the U-shaped part (1). The U-shaped part (1) and the decorative part are thereby joined together by means of the layer of resin such that when the mentioned layer of resin dries, the perforations (13) present in the U-shaped part (1) provide a rivet effect to firmly join the U-shaped part (1) and the part to be suspended to one another.

The device of the invention includes a magnetizing part (9) connected to the sleeve (5) to enable the sleeve (5) to move on the shaft (4).

The presence of this magnetizing part (9) provides the advantage of enabling the sleeve (5) to be manipulated and to move on the shaft (4) given that the decorative part suspended on the device of the invention has a low thickness, allowing it to be traversed magnetically.

This magnetizing part (9) is optionally formed by an iron or steel plate for manipulating the sleeve (5) on the shaft (4) by means of an external magnet element. Therefore, by using a magnet positioned so as to face the magnetizing part (9), the user would be capable of providing the movement of the sleeve (5) on the shaft (4).

In another embodiment, the magnetizing part (9) is formed by a plate of magnetized material for manipulating the sleeve (5) on the shaft (4) by means of an external element formed by iron or steel. Therefore, by using an external iron or steel element positioned so as to face the magnetizing part (9), the user would be capable of providing the movement of the sleeve (5) on the shaft (4).

Advantageously, the device of the invention provides secure means assuring that the suspension elements (2) will not come out of the sleeve-shaft assembly once they have been inserted in the free passages (6) of the sleeve (5).

To that end, the device of the invention has a locking component (7) which is preferably formed by a movable element with emerging branches (17) which are fitted by gravity onto notches (18) of the shaft (4) for preventing the sleeve (5) from moving on the shaft (4), as observed in Figure 2.

Optionally and for the purpose of providing a second secure means, the locking component (7) of the device of the invention can additionally include a shoulder (8) with a perforation (21) in which a secure closing means formed by a rod connected to an electronic lock is inserted for preventing the locking component (7) from moving. This second secure means is not depicted in the attached figures.

Lastly, the device of the invention has supporting means to enable placing the device in which the decorative part will be suspended.

To that end, the supporting means are formed in a first embodiment by at least one spring located at the end of the shaft (4) on which a rod (10) is assembled to provide a retractable movement. The mentioned spring is located internally, at the end of the shaft (4), so it cannot be seen in the attached figures.

Optionally, the supporting means in a second embodiment are formed by a channeled element (14) in which the shaft (4) on which there is assembled a complementary part (15) for preventing the shaft (4) from coming out of the channeled element (14) rests.

Both embodiments are depicted in Figures 1 and 2, such that the supporting means of the device of the invention can be formed by the first embodiment, the second embodiment in detail, or even both.

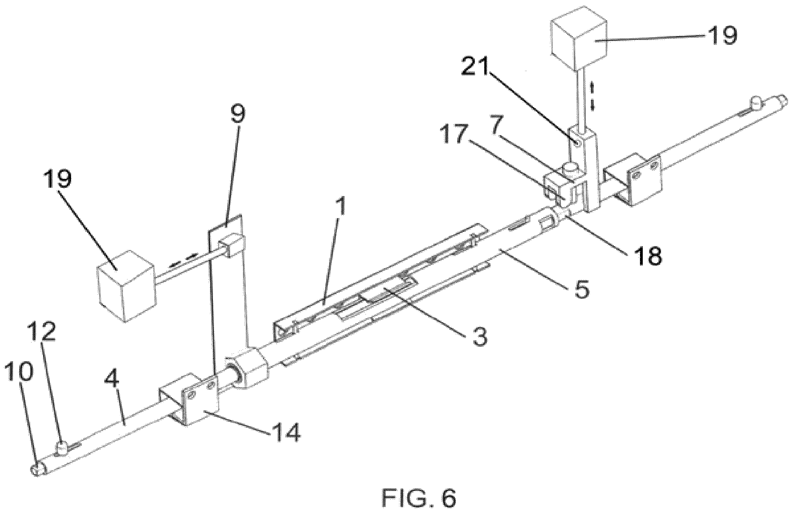

Optionally, the device of the invention allows plates with high thickness to be suspended; in this case, it will be necessary for the device to include electromechanical elements (19) so as to enable the sleeve (5) to move laterally on the shaft (4), as depicted in Figure 6. In this sense, it should be emphasized that a suspended part or plate with high thickness would not allow the movement of the sleeve to be magnetically actuated.

Therefore, the electromechanical elements (19) are connected in the device of the invention to the magnetizing part (9) and to the locking component (7) for the electromechanical actuation thereof. Preferably, part (7) will be moved vertically, performing its locking function by means of one of the locking elements (19), and part (9) will be moved horizontally, opening and closing the sleeve (5) by means of the other locking element (19).

Optionally, the device can have an electric control panel (20), actuated by means of a security code or fingerprints, allowing access to the current that will move the device object of this invention, i.e., activating the electromechanical elements (19), thereby achieving a higher level of security of the device.

## Claims

1. A device for suspending parts, comprising:
- a U-shaped part (1) with perforations (13) comprising:
▪ suspension elements (2),
▪ a front hanging body (3) joined to the U-shaped element (1),
- a shaft (4) having a circumferential flange (11) as a stop and anti-rotation means (12),
- **characterized in that** it comprises a sleeve (5) that moves on the shaft (4), having free passages (6) for receiving the suspension elements (2) and having a hollow recess (16) for coupling the central hanging body (3),
- supporting means,
- a magnetizing part (9) connected to the sleeve (5) to enable the sleeve (5) to move on the shaft (4),
- a locking component (7),
with the front hanging body (3) being coupled on the shaft (4) so as to coincide with the recess (16) of the sleeve (5) to enable the sleeve (5) to move on the shaft (4).

2. The device for suspending parts according to claim 1, **characterized in that** the locking component (7) is formed by a movable element with emerging branches (17) which are fitted by gravity onto notches (18) of the shaft (4) for preventing the sleeve (5) from moving on the shaft (4).

3. The device for suspending parts according to claim 1, **characterized in that** the suspension elements (2) are formed by steel cables, nylon threads, or steel bars.

4. The device for suspending parts according to claim 1, **characterized in that** the magnetizing part (9) is formed by a steel, iron plate for manipulating the sleeve (5) on the shaft (4) by means of an external magnet element.

5. The device for suspending parts according to claim 1, **characterized in that** the magnetizing part (9) is formed by a plate made of a magnetized material for manipulating the sleeve (5) on the shaft (4) by means of an external element formed by iron or steel.

6. The device for suspending parts according to claim 1, **characterized in that** the supporting means are formed by at least one spring located at the end of the shaft (4) on which a rod (10) is assembled to provide a retractable movement.

7. The device for suspending parts according to claim 1, **characterized in that** the supporting means are formed by a channeled element (14) in which the shaft (4) on which there is assembled a complementary part (15) for preventing the shaft (4) from coming out of the channeled element (14) rests.

8. The device for suspending parts according to claim 1, **characterized in that** the locking component (7) has a shoulder (8) with a perforation (21) in which a secure closing means formed by a rod connected to an electronic lock is inserted for preventing the locking component (7) from moving.

9. The device for suspending parts according to claim 1, **characterized in that** it has electromechanical elements (19) connected to the magnetizing part (9) and to the locking component (7) for the electromechanical actuation thereof.

10. The device for suspending parts according to claim 9, **characterized in that** it has an electric control panel (20), actuated by means of a security code, for activating the electromechanical elements (19).

## Patentansprüche

1. Vorrichtung zum Aufhängen von Teilen, umfassend:
- ein U-förmiges Teil (1) mit Bohrungen (13) umfassend:
▪ Aufhängelemente (2),
▪ einen hängenden Vorderkörper (3), welcher mit dem U-förmigen Element (1) zusammengefügt ist,
- eine Welle (4), welche einen umlaufenden Flansch (11) als Anschlag- und Antirotationsmittel (12) aufweist,
**dadurch gekennzeichnet, dass** sie Folgendes umfasst
- eine Muffe (5), welche sich auf der Welle (4) bewegt, aufweisend freie Durchgänge (6) zum Empfangen der Aufhängelemente (2) und aufweisen eine hohle Aussparung (16) zum Koppeln des hängenden Mittelkörpers (3),
- Stützmittel,
- ein Magnetisierungsteil (9), welches mit der Muffe (5) verbunden ist, um der Muffe (5) zu ermöglichen sich auf der Welle (4) zu bewegen,
- ein Verriegelungsbauteil (7),
wobei der hängende Vorderkörper (3) auf der Welle (4) gekoppelt ist, um mit der Aussparung (16) der Muffe (5) übereinzustimmen, um der Muffe (5) zu ermöglichen sich auf der Welle (4) zu bewegen.

2. Vorrichtung zum Aufhängen von Teilen nach Anspruch 1, **dadurch gekennzeichnet, dass** das Verriegelungsbauteil (7) aus einem beweglichen Element mit herausragenden Verzweigungen (17) gebildet ist, welche durch die Schwerkraft auf Nuten (18) der Welle (4) aufgesetzt sind, um zu verhindern, dass sich die Muffe (5) auf der Welle (4) bewegt.

3. Vorrichtung zum Aufhängen von Teilen nach Anspruch 1, **dadurch gekennzeichnet, dass** die Aufhängelemente (2) aus Stahlkabeln, Nylonfäden oder Stahlstäben gebildet sind.

4. Vorrichtung zum Aufhängen von Teilen nach Anspruch 1, **dadurch gekennzeichnet, dass** das Magnetisierungsteil (9) aus eine Stahl-, Eisenplatte gebildet ist, zur Handhabung der Muffe (5) auf der Welle (4) mittels eines äußeren Magnetelements.

5. Vorrichtung zum Aufhängen von Teilen nach Anspruch 1, **dadurch gekennzeichnet, dass** das Magnetisierungsteil (9) aus einer Platte hergestellt aus einem magnetisierten Material gebildet ist, zur Handhabung der Muffe (5) auf der Welle (4) mittels eines äußeren Elements, welches aus Eisen oder Stahl gebildet ist.

6. Vorrichtung zum Aufhängen von Teilen nach Anspruch 1, **dadurch gekennzeichnet, dass** die Stützmittel aus mindestens einer Feder gebildet sind, welche sich am Ende der Welle (4) befindet, auf welcher eine Stange (10) montiert ist, um eine einfahrbare Bewegung bereitzustellen.

7. Vorrichtung zum Aufhängen von Teilen nach Anspruch 1, **dadurch gekennzeichnet, dass** die Stützmittel aus einem kanalisierten Element (14) gebildet sind, in welchem sich die Welle (4), auf welcher ein Komplementärteil (15) montiert ist, um zu verhindern, dass die Welle (4) aus dem kanalisierten Element (14) rausgeht, abstützt.

8. Vorrichtung zum Aufhängen von Teilen nach Anspruch 1, **dadurch gekennzeichnet, dass** das Verriegelungsbauteil (7) eine Schulter (8) mit einer Bohrung (21) aufweist, in welche ein sicheres Schließmittel gebildet aus einer Stange, welche mit einer elektronischen Verriegelung verbunden ist, eingeführt ist, um zu verhindern, dass sich das Verriegelungsbauteil (7) bewegt.

9. Vorrichtung zum Aufhängen von Teilen nach Anspruch 1, **dadurch gekennzeichnet, dass** sie elektromechanische Elemente (19) aufweist, welche mit dem Magnetisierungsteil (9) und mit dem Verriegelungsbauteil (7) zur elektromechanischen Betätigung derselben verbunden sind.

10. Vorrichtung zum Aufhängen von Teilen nach Anspruch 9, **dadurch gekennzeichnet, dass** sie eine elektrische Steuertafel (20) aufweist, welche mittels eines Sicherheitscodes betätigt wird, um die elektromechanischen Elemente (19) zu aktivieren.

## Revendications

1. Dispositif pour suspendre des pièces, comprenant :
- une partie en forme de U (1) avec des perforations (13) comprenant :
▪ des éléments de suspension (2),
▪ un corps d'accrochage avant (3) attaché à l'élément en forme de U (1),
- un arbre (4) ayant une bride circonférentielle (11) comme un moyen de butée et anti-rotation (12), **caractérisé en ce qu'**il comprend
- un manchon (5) qui se déplace sur l'arbre (4), ayant des passages libres (6) pour recevoir les éléments de suspension (2) et ayant un évidement creux (16) pour coupler le corps d'accrochage central (3),
- des moyens de support,
- une partie magnétisante (9) connectée au manchon (5) pour permettre au manchon (5) de se déplacer sur l'arbre (4),
- un composant de blocage (7),
le corps d'accrochage avant (3) étant couplé sur l'arbre (4) afin de coïncider avec l'évidement (16) du manchon (5) pour permettre au manchon (5) de se déplacer sur l'arbre (4).

2. Dispositif pour suspendre des pièces selon la revendication 1, **caractérisé en ce que** le composant de blocage (7) est formé par un élément déplaçable avec des branches émergentes (17) qui sont ajustées par gravité sur des encoches (18) de l'arbre (4) pour empêcher le manchon (5) de se déplacer sur l'arbre (4).

3. Dispositif pour suspendre des pièces selon la revendication 1, **caractérisé en ce que** les éléments de suspension (2) sont formés par des câbles en acier, des fils en nylon ou des barres en acier.

4. Dispositif pour suspendre des pièces selon la revendication 1, **caractérisé en ce que** la partie magnétisante (9) est formée par une plaque en acier, en fer pour manipuler le manchon (5) sur l'arbre (4) au moyen d'un élément magnétique extérieur.

5. Dispositif pour suspendre des pièces selon la revendication 1, **caractérisé en ce que** la partie magnétisante (9) est formée par une plaque faite d'un matériau magnétisé pour manipuler le manchon (5) sur l'arbre (4) au moyen d'un élément extérieur formé par du fer ou de l'acier.

6. Dispositif pour suspendre des pièces selon la revendication 1, **caractérisé en ce que** les moyens de support sont formés par au moins un ressort situé à l'extrémité de l'arbre (4) sur lequel une tige (10) est assemblée pour fournir un mouvement rétractable.

7. Dispositif pour suspendre des pièces selon la revendication 1, **caractérisé en ce que** les moyens de support sont formés par un élément à canal (14) dans lequel repose l'arbre (4) sur lequel il y a assemblée une partie complémentaire (15) pour empêcher l'arbre (4) de sortir du composant à canal (14).

8. Dispositif pour suspendre des pièces selon la revendication 1, **caractérisé en ce que** le composant de blocage (7) a un épaulement (8) avec une perforation (21) dans laquelle est inséré un moyen de fermeture assuré formé par une tige connectée à une serrure électronique pour empêcher le composant de blocage (7) de se déplacer.

9. Dispositif pour suspendre des pièces selon la revendication 1, **caractérisé en ce qu'**il a des éléments électromécaniques (19) connectés à la partie magnétisante (9) et au composant de blocage (7) pour l'actionnement électromécanique de ceux-ci.

10. Dispositif pour suspendre des pièces selon la revendication 9, **caractérisé en ce qu'**il a un panneau de contrôle électrique (20), actionné au moyen d'un code de sécurité, pour activer les éléments électromécaniques (19).
